# FASCICULE DE BREVET EUROPEEN

(11) **EP 4 121 327 B1**
(45) Date de publication et mention de la délivrance du brevet: **29.05.2024**
(21) Numéro de dépôt: 21716484.7
(22) Date de dépôt: 08.03.2021
(51) Int. Cl.: B60T 10/04, B60K 17/356, F16H 61/4008, F16H 61/4035, F16H 61/4157

(54) **TRANSMISSION HYDRAULIQUE AVEC FREINAGE D'URGENCE**
HYDRAULISCHES GETRIEBE MIT NOTBREMSUNG
HYDRAULIC TRANSMISSION WITH EMERGENCY BRAKING

(30) Priorité: 18.03.2020 FR 2002644
(43) Date de publication de la demande: 25.01.2023
(73) Titulaire: Poclain Hydraulics Industrie, 60410 Verberie (FR)
(72) Inventeur: HEREN, Jean, 60410 VERBERIE (FR)
(74) Mandataire: Cabinet Beau de Loménie
(86) Numéro de dépôt international: PCT/FR2021/050391
(87) Numéro de publication internationale: WO 2021/186120

(56) Documents cités:
- WO-A1-2014/170608
- FR-A1- 3 010 325
- US-A- 3 952 511
- US-A- 3 981 374
- US-A1- 2018 229 603
- US-A1- 2019 136 877

## Description

### Domaine Technique

Le présent exposé concerne le domaine des transmissions hydrauliques, et en particulier les transmissions hydrauliques entrainées au moyen de moteurs électriques.

### Technique antérieure

Les véhicules ayant une transmission électrique sont généralement munis d'un système de freinage conventionnel, en plus du freinage par frein moteur.

Sur les véhicules et engins ayant des fonctions tout terrain ou des organes mobiles tels que des organes de levage ou une tourelle, les conditions d'utilisation peuvent conduire à des situations dans lesquelles la charge est menante, notamment de par son inertie. Ces situations nécessitent ainsi d'intégrer des moyens de freinage pour le système. Pour la traction, on intègre alors de manière conventionnelle des moyens de freinage à friction, ou on prévoit une utilisation du frein moteur. L'utilisation en frein moteur est agréable pour la conduite sur le long terme, et permet d'éviter un échauffement de freins à friction sur le long terme. On comprend cependant que de tels systèmes entrainent des pertes importantes. Le document WO 2014170608 A1 divulgue un exemple de système de transmission hydraulique.

Les circuits de type régénératifs visent généralement à améliorer cette problématique. De tels circuits permettent notamment d'exploiter des phases de freinage ou de décélération pour recharger des batteries ou accumulateurs, ce qui vient absorber l'énergie de la transmission en la récupérant et ainsi réaliser une fonction de frein moteur. Dans ces phases, on souhaite effectuer une retenue du véhicule ou de l'engin, c'est-à-dire un effort qui s'oppose au déplacement au niveau des roues. Dans le cas d'un système régénératif, l'effort de retenue à la roue s'appuie sur le rechargement de batteries ou d'accumulateurs. Toutefois, de tels circuits posent des problématiques importantes en termes de capacité à assurer une fonction de retenue de la transmission en cas de défaillance du système de pilotage, et également dans le cas où les batteries ou accumulateurs sont entièrement chargés. En particulier, dans le cas d'une demande de retenue sur une période de temps longue, par exemple dans une longue descente, lorsque les batteries ou accumulateurs sont chargés, il se produit une perte de la fonction de retenue. Par exemple, il peut être nécessaire de supprimer le transfert d'énergie vers les accumulateurs pour ne pas les détériorer lorsqu'ils sont chargés

Le présent exposé vise ainsi à répondre au moins partiellement à ces problématiques.

### Exposé de l'invention

A cet effet ; le présent exposé concerne système de transmission hydraulique comprenant un premier appareil hydraulique adapté pour être entrainé en rotation par un moteur primaire, un deuxième appareil hydraulique adapté pour entrainer en rotation un organe de véhicule, le premier appareil hydraulique et le deuxième appareil hydraulique définissant un circuit hydraulique comprenant une ligne d'alimentation et une ligne de retour, le système étant caractérisé en ce qu'il comprend des moyens de pilotage du moteur primaire, configurés de manière à émettre des consignes d'accélération ou de retenue, le système étant configuré de sorte que, en cas de consigne de retenue, le moteur primaire exerce une fonction de retenue sur la rotation de l'organe de véhicule en réalisant une élévation de pression dans la ligne de retour, et une valve de retour positionnée sur la ligne de retour, la valve de retour étant configurée de manière à définir une restriction variable dans la ligne de retour, la valve de retour étant pilotée par une commande, et étant configurée pour sélectivement former une restriction sur la ligne de retour, de manière à exercer une fonction de retenue sur la rotation de l'organe de véhicule

Selon un exemple, les moyens de pilotage sont adaptés pour déterminer la capacité du moteur primaire à réaliser ladite fonction de retenue, et à piloter la valve de retour et/ou le moteur primaire pour exercer une fonction de retenue sur la rotation de l'organe de véhicule.

Selon un exemple, la valve de retour est configurée pour, en l'absence de commande, former une restriction maximale sur la ligne de retour, et en présence d'une commande maximale, ne pas former de restriction sur la ligne de retour.

Selon un exemple, le circuit hydraulique comprend un circuit de gavage, alimenté par une pompe de gavage, ledit circuit de gavage étant configuré de manière à assurer un gavage de la ligne d'admission, et de la ligne de retour du circuit hydraulique, en amont et en aval de la valve de retour.

Selon un exemple, la commande de la valve de retour est pilotée par un circuit de freinage comprenant une électrovanne proportionnelle, configurée pour délivrer une pression nulle en l'absence de commande électrique.

Selon un exemple, le circuit de commande comprend une valve de freinage, pilotée par une commande mécanique, la valve de freinage reliant sélectivement l'électrovanne proportionnelle au refoulement d'une pompe de gavage du système d'assistance hydraulique, ou à un réservoir à pression ambiante.

Selon un exemple, le système comprend en outre un calculateur, adapté pour piloter la valve de retour en fonction de la vitesse de rotation du moteur primaire et/ou d'une consigne appliquée par un utilisateur.

Selon un exemple, le système comprend en outre un frein couplé au deuxième appareil hydraulique, le frein étant piloté par une commande, le frein et la valve de retour étant configurés de sorte que :
- pour une pression de commande supérieure à une seconde valeur seuil de pression, le frein n'exerce pas de couple de freinage, et la valve de retour ne forme pas de restriction sur la ligne de retour,
- pour une pression de commande comprise entre la seconde valeur seuil de pression et une première valeur seuil de pression strictement inférieure à la seconde valeur seuil de pression, le frein n'exerce pas de couple de freinage, et la valve de retour forme une restriction sur la ligne de retour proportionnelle à la pression de commande,
- pour une pression de commande égale à la première valeur seuil de pression, la valve de retour forme une restriction maximale sur la ligne de retour, et le frein n'exerce pas de couple de freinage,
- pour une pression de commande strictement inférieure à la première valeur seuil de pression, la valve de retour forme une restriction maximale sur la ligne de retour, et le frein exerce un couple de freinage proportionnel à la pression de commande.
- pour une pression de commande nulle, la valve de retour forme une restriction maximale sur la ligne de retour, et le frein exerce un couple de freinage maximal.

Selon un exemple, le circuit hydraulique est un circuit en boucle fermée, et dans lequel le premier appareil hydraulique et le deuxième appareil hydraulique présentent un fonctionnement réversible.

Selon un exemple, le premier appareil hydraulique est une pompe hydraulique à cylindrée variable.

Le premier appareil hydraulique présente alors typiquement un sens principal d'entrainement, dans lequel la ligne d'alimentation est relié à un refoulement du premier appareil hydraulique et la ligne de retour est reliée à l'admission du premier appareil hydraulique, ledit système comprenant en outre un bloc d'échange, adapté pour prélever du fluide dans la ligne de retour et le déverser dans un réservoir lorsque le premier appareil hydraulique est entrainé dans ledit sens principal d'entrainement, et pour ne pas prélever du fluide dans la ligne de retour lorsque le premier appareil hydraulique n'est pas entrainé dans ledit sens principal d'entrainement.

Le présent exposé concerne également un véhicule comprenant un tel système dans lequel le moteur primaire est un moteur électrique.

Le présent exposé concerne en outre un procédé de pilotage d'un système de transmission hydraulique comprenant un premier appareil hydraulique adapté pour être entrainé en rotation par un moteur primaire, un deuxième appareil hydraulique adapté pour entrainer en rotation un organe de véhicule, le premier appareil hydraulique et le deuxième appareil hydraulique définissant un circuit hydraulique comprenant une ligne d'alimentation et une ligne de retour, et des moyens de pilotage du moteur primaire, configurés de manière à émettre des consignes d'accélération ou de retenue, dans lequel
- lors du fonctionnement de la transmission, on détecte une anomalie, ou une consigne de l'utilisateur,
- lors d'une consigne de retenue ou d'une détection d'anomalie, on actionne un
circuit de freinage, de manière à générer une perte de charge dans la ligne de retour via une valve de retour et/ou on pilote le moteur primaire de manière à générer une élévation de pression dans la ligne de retour.

Selon un exemple, lors de l'émission d'une consigne de retenue, on détermine la capacité du moteur primaire à réaliser ladite fonction de retenue, et on pilote la valve de retour et/ou le moteur primaire pour exercer une fonction de retenue sur la rotation de l'organe de véhicule.

Selon un exemple, la valve de retour est configurée de manière à, en l'absence de commande, former une restriction maximale sur la ligne de retour, et en présence d'une commande maximale, ne pas former de restriction sur la ligne de retour.

Selon un exemple, on pilote la valve de retour en fonction de la vitesse de rotation du moteur primaire et/ou d'une consigne appliquée par un utilisateur.

### Brève description des dessins

L'invention et ses avantages seront mieux compris à la lecture de la description détaillée faite ci-après de différents modes de réalisation de l'invention donnés à titre d'exemples non limitatifs.
[Fig. 1] La figure 1 présente un exemple de système selon un aspect de l'invention.
[Fig. 2] La figure 2 présente un exemple de variante du système illustré sur la figure 1.
[Fig. 3] La figure 3 présente un exemple de variante du système illustré sur la figure 2.
[Fig. 4] La figure 4 illustre schématiquement un exemple de procédé selon un aspect de l'invention.

Sur l'ensemble des figures, les éléments en commun sont repérés par des références numériques identiques.

### Description des modes de réalisation

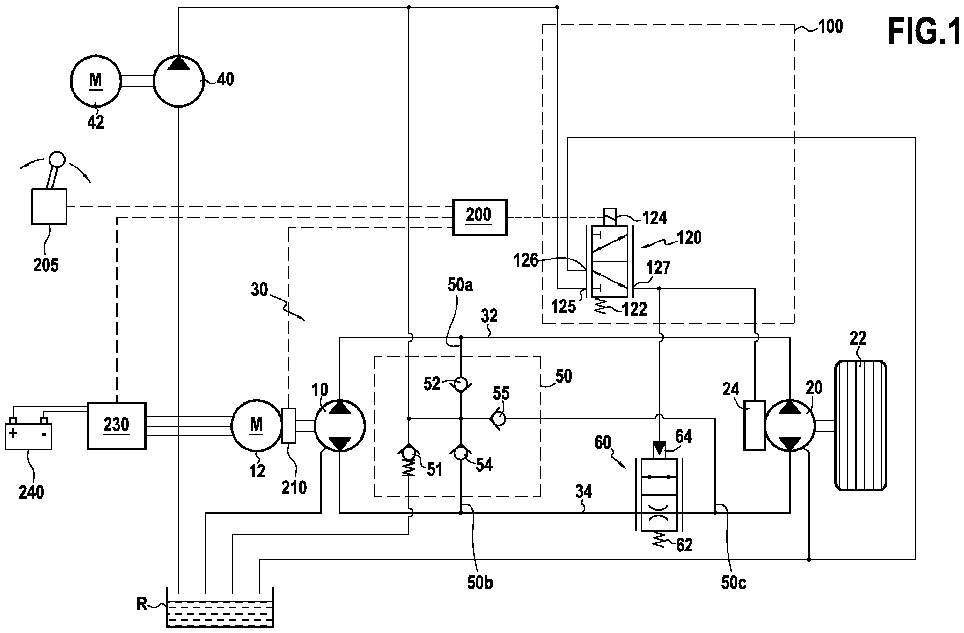

La figure 1 présente un exemple de système selon un aspect de l'invention.

Cette figure présente un circuit de transmission hydraulique, comprenant un premier appareil hydraulique 10 et un deuxième appareil hydraulique 20 définissant un circuit hydraulique 30 comprenant une ligne d'alimentation 32 et une ligne de retour 34. Le circuit hydraulique 30 est typiquement un circuit hydraulique en boucle fermée.

Le premier appareil hydraulique 10 est couplé à un moteur primaire 12, typiquement un moteur électrique, adapté pour entrainer en rotation le premier appareil hydraulique 10 qui fonctionne alors comme une pompe hydraulique. Le premier appareil hydraulique 10 est typiquement un appareil hydraulique à pistons axiaux, par exemple à cylindrée fixe, ou typiquement un appareil hydraulique à pistons radiaux, par exemple à cylindrée fixe. Un embrayage, non représenté sur la figure 1, peut être interposé entre le premier appareil hydraulique 10 et le moteur primaire 12, afin de permettre de sélectivement coupler ou désengager le premier appareil hydraulique 10 et le moteur primaire 12.

Le moteur primaire 12 est piloté pour la conduite de la machine. Il est actionné par un contrôleur 230 relié à une interface homme machine 205 telle qu'une manette, une pédale, un organe communément désigné sous l'appellation en langue anglaise « joystick » ou tout autre moyen adapté. Par la suite, on prendra comme exemple une manette 205, étant entendu que ce mode de réalisation n'est pas limitatif.

Par exemple, le contrôleur 230 peut distribuer l'électricité venant d'une batterie 240 vers le moteur 12, en fonction d'une information de vitesse de rotation du moteur 12, et d'une consigne de vitesse, de poussée ou d'accélération venant de la manette 205. Les informations du capteur et de la manette peuvent être reçues par un calculateur 200, par exemple une unité électronique (communément désignée par l'acronyme « ECU » pour Unité de Contrôle Electronique ou « Electronic Control Unit » selon l'appellation usuelle en langue anglaise) intégrée au contrôleur, ou externe. L'unité électronique peut envoyer un signal de pilotage vers le contrôleur 230, de manière à piloter le moteur 12. Le contrôleur 230 et le calculateur 200 peuvent être un même élément ou des éléments distincts. Le contrôleur 230 et le calculateur 200 forment ainsi des moyens de pilotage du moteur primaire 12. On représente à titre d'exemple un capteur 210 de vitesse de rotation du moteur primaire 12, adapté pour fournir une information relative à la vitesse de rotation du moteur primaire 12.

Lors de la conduite, l'utilisateur peut appliquer une consigne d'accélération par la manette 205, ce qui va entrainer un effort dans le sens de l'avancement. L'utilisateur peut également appliquer une consigne de retenue par la manette, c'est-à-dire une demande d'un effort s'opposant à l'avancement. Suivant la nature du terrain, ses consignes entrainent une vitesse constante, une accélération ou un ralentissement, suivant que le terrain monte ou descend par exemple. Mais dans tous les cas, une demande de vitesse supplémentaire ou d'accélération produira une augmentation de couple dans le sens de l'avancement sur les roues, tandis qu'une demande de retenue produira une augmentation de couple dans le sens s'opposant à l'avancement sur les roues. Autrement dit, par rapport à un sens d'avancement du véhicule ou de l'engin à un instant donné, la demande de retenue crée un couple aux roues qui s'oppose à l'avancement.

On comprend que l'effet de décélération ou de freinage ainsi obtenu est à distinguer d'un effet de freinage obtenu par des moyens de freinage distincts tels qu'un frein de parking ou un frein dynamique, par exemple un frein à friction.

Le deuxième appareil hydraulique 20 est couplé à un essieu ou à une roue de véhicule ou d'engin (une roue 22 dans l'exemple illustré sur la figure 1), et est adapté pour présenter un fonctionnement de moteur hydraulique, et ainsi réaliser un entrainement en rotation de la roue ou de l'essieu. Le deuxième appareil hydraulique 20 est typiquement un appareil hydraulique à pistons radiaux, pouvant être à cylindrée fixe ou à cylindrée variable.

Les désignations de la ligne d'alimentation 32 et de la ligne de retour 34 correspondent à un mode de fonctionnement principal de la transmission hydraulique, typiquement pour un déplacement en marche avant d'un véhicule ou d'un engin. On comprend cependant que la transmission hydraulique est typiquement réversible, et que ces désignations sont uniquement données à titre d'exemple et ne sont pas limitatives. Ainsi, le circuit hydraulique 30 peut fonctionner dans un premier sens dans lequel la ligne d'alimentation est la ligne haute pression du circuit tandis que la ligne de retour 34 est la ligne basse pression du circuit, ce qui correspond typiquement à un fonctionnement du circuit en traction, ou inversement pour un fonctionnement en marche arrière. Le circuit hydraulique 30 peut également fonctionner en retenue, ou frein moteur, pour un déplacement en traction ou en marche arrière. Le sens des fluides est le même que pour le sens de déplacement considéré, mais les pressions s'inversent. Cela correspond à un fonctionnement de la transmission dit « en quatre quadrants ». D'une manière générale, l'effet de retenue est créé lorsqu'on établit une élévation de pression dans la ligne hydraulique de retour.

Le système présente également une pompe de gavage 40, entrainée en rotation par un moteur secondaire 42. La pompe de gavage 40 et le moteur secondaire 42 peuvent former un groupe electro-pompe. La pompe de gavage 40 est reliée au circuit hydraulique 30 via un circuit de gavage 50, comprenant des clapets anti retour 52, 54 et 55 permettant de réaliser un gavage de la ligne d'alimentation 32 et de la ligne de retour 34 du circuit hydraulique 30. Le circuit de gavage 50 comprend également un clapet anti retour taré 51, permettant de décharger la pression dans un réservoir R lorsque la pression dans le circuit de gavage 50 dépasse une valeur seuil de gavage. Le circuit de gavage 50 assure un gavage du circuit hydraulique 30, et un maintien de la cylindrée du premier appareil hydraulique 10. Dans l'ensemble du texte, le réservoir R désigne un réservoir à pression ambiante, étant entendu qu'il peut s'agit de plusieurs réservoirs distincts ou d'un même réservoir pour les différentes occurrences.

Le système proposé comprend également une valve de retour 60, positionnée sur la ligne de retour 34. La valve de retour 60 est une valve proportionnelle pilotée par une commande hydraulique 64 à laquelle s'oppose un moyen de rappel 62, typiquement un ressort. La valve de retour 60 est configurée de manière à définir une restriction variable sur la ligne de retour 34, entre :
- une configuration passante, dans laquelle la valve de retour 60 forme une restriction ayant une valeur nulle de restriction, dans laquelle la valve de retour n'a pas d'impact sur l'écoulement dans la ligne de retour, ou uniquement un impact négligeable, et
- une configuration restreinte, dans laquelle la valve de retour 60 forme une restriction dans la ligne de retour 34 ayant une valeur maximale de restriction.

La valve de retour 60 est par défaut dans sa configuration restreinte, et l'application d'une commande hydraulique permet de l'amener vers sa configuration passante. Selon un exemple, pour une pression de pilotage appliquée à la commande hydraulique 64 inférieure ou égale à 12 bar, la valve de retour est dans sa configuration restreinte. Pour une pression de pilotage comprise entre 12 et 22 bar, la valve de retour forme une restriction proportionnelle, et pour une pression de pilotage supérieure ou égale à 22 bar, la valve de retour 60 est dans sa configuration passante.

Le circuit de gavage 50 est configuré de manière à permettre de réaliser un gavage de la ligne d'alimentation 32 via une première ligne de gavage 50a munie du clapet anti retour 52, et également de manière à permettre de réaliser un gavage de la ligne de retour 34 en aval et en amont de la valve de retour 60, respectivement via une deuxième ligne de gavage 50b et une troisième ligne de gavage 50c munies respectivement des deux clapets anti retour 54 et 55. Ce gavage en amont et en aval de la valve de retour 60 permet notamment d'éviter l'apparition d'un phénomène de cavitation lors de l'actionnement de la valve de retour 60. En effet, cette dernière crée une dépression en aval, qui peut alors entrainer une cavitation. Le gavage en amont et en aval de la valve de retour 60 permet d'éviter de phénomène.

Le pilotage en pression de la valve de retour 60 est assuré par un circuit de freinage 100. Dans l'exemple illustré sur la figure 1, le circuit de freinage 100 comprend une valve de consigne 120.

La valve de consigne 120 est une électrovanne proportionnelle, pilotée par une commande électrique 124 couplée à au calculateur 200, à laquelle s'oppose un moyen de rappel 122, typiquement un ressort. La valve de consigne présente un premier orifice 125 relié à la pompe de gavage 40, un deuxième orifice 126 relié au réservoir R, et un troisième orifice 127 relié à la commande hydraulique 64, et également dans le mode de réalisation représenté à un frein 24, ce mode de réalisation n'étant pas limitatif. Alimenter ainsi le frein 24 via la pompe de gavage 40 permet de limiter le nombre de commandes dans le circuit.

La valve de consigne 120 est pilotée entre une première configuration dans laquelle le premier orifice 125 est obturé alors que le deuxième orifice 126 est relié au troisième orifice 127, et une seconde configuration dans laquelle le premier orifice 125 est relié au troisième orifice 127 alors que le deuxième orifice 126 est obturé. Elle est par défaut, c'est-à-dire en l'absence d'application de la commande électrique 124, dans sa première configuration, dans laquelle elle relie la commande hydraulique 64 de la valve de retour 60 au réservoir R.

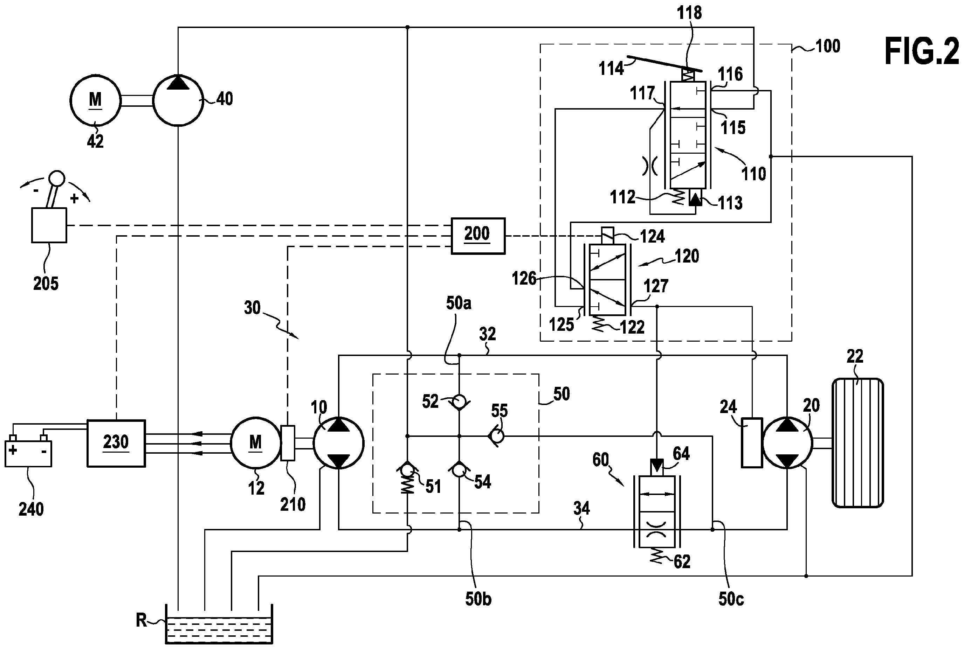

La figure 2 représente une variante de la figure 1, dans laquelle le circuit de freinage 100 comprend une valve de freinage 110 et une valve de consigne 120. On ne décrit ci-après que les différences par rapport au mode de réalisation déjà décrit en référence à la figure 1.

Dans ce mode de réalisation, la valve de freinage 110 est une valve proportionnelle, typiquement pilotée par une commande mécanique 114, par exemple un levier de frein de parking ou une commande de frein pouvant être actionné par l'utilisateur, à laquelle s'oppose un moyen de rappel 112 tel qu'un ressort, et une commande hydraulique 113 reliée à un repiquage de pression en sortie de la valve de freinage 110. Dans l'exemple illustré, la commande mécanique 114 est couplée à un ressort de tarage 118. L'actionnement de la commande mécanique 114 vient charger le ressort de tarage 118, et ainsi modifier l'équilibre avec le moyen de rappel 112 et la commande hydraulique 113, de manière à piloter la valve de freinage 110. La valve de freinage présente un premier orifice 115, un deuxième orifice 116 et un troisième orifice 117.

La valve de consigne 120 est une électrovanne proportionnelle, pilotée par une commande électrique 124 couplée à au calculateur 200, à laquelle s'oppose un moyen de rappel 122, typiquement un ressort. La valve de consigne présente un premier orifice 125, un deuxième orifice 126 et un troisième orifice 127.

Le premier orifice 115 de la valve de freinage 110 est relié à la pompe de gavage 40. Le deuxième orifice 116 de la valve de freinage 110 est relié à un réservoir R. Le troisième orifice 117 de la valve de freinage 110 est relié au premier orifice 125 de la valve de consigne 120. Le deuxième orifice 126 de la valve de consigne 120 est relié au réservoir R. le troisième orifice 127 de la valve de consigne 120 est relié à la commande hydraulique 64, et également à un frein 24, typiquement un frein à disques formant un frein négatif, appliqué par un élément de rappel tel qu'un ressort ou une rondelle, et désengagé par application d'une pression dans une chambre, couplé à la deuxième machine hydraulique 20, formant par exemple un frein de parking.

La valve de freinage 110 est pilotée entre une première configuration dans laquelle le premier orifice 115 est relié au troisième orifice 117 alors que le deuxième orifice 116 est obturé, et une seconde configuration dans laquelle le premier orifice 115 est obturé alors que le deuxième orifice 116 est relié au troisième orifice 117.

La valve de consigne 120 est pilotée entre une première configuration dans laquelle le premier orifice 125 est obturé alors que le deuxième orifice 126 est relié au troisième orifice 127, et une seconde configuration dans laquelle le premier orifice 125 est relié au troisième orifice 127 alors que le deuxième orifice 126 est obturé. Elle est par défaut, c'est-à-dire en l'absence d'application de la commande électrique 124, dans sa première configuration, dans laquelle elle relie la commande hydraulique 64 de la valve de retour 60 au réservoir R.

Le circuit de freinage 100 est typiquement configuré de manière à ce que la commande mécanique 114 de la valve de freinage 110 soit prioritaire par rapport à la commande électrique 124 de la valve de consigne 120. Ainsi, le calculateur 200 qui pilote la commande électrique 124 de la valve de consigne 120 va typiquement moduler sa consigne en fonction d'une commande appliquée via la commande mécanique 114 de la valve de freinage 110, de manière à ce qu'une consigne appliquée manuellement par un utilisateur soit appliquée de manière prioritaire. A titre d'exemple, la commande électrique 124 peut être pilotée de manière à ce que la valve de consigne soit dans sa seconde configuration lorsqu'une consigne est appliquée via la commande mécanique 114.

On décrit à présent le fonctionnement du système tel que présenté sur les figures 1 et 2.

En fonctionnement régulier, c'est-à-dire un fonctionnement dans lequel il n'y a pas de défaillance de composants, on considère un fonctionnement dans le sens nominal de la transmission hydraulique. Le cas échéant, la commande mécanique 114 est désengagée. Le calculateur 200 pilote la commande électrique 124 de manière à délivrer une consigne en pression à la commande hydraulique 64 de la valve de retour afin que cette dernière soit dans sa configuration passante. La valve de consigne 120 est alors dans sa seconde configuration (dans le cas du mode de réalisation représenté sur la figure 2, la valve de freinage 110 est alors dans sa première configuration). La commande hydraulique 64 de la valve de retour 60 est ainsi pilotée par la pression délivrée par la pompe de gavage 40. Un tel fonctionnement correspond à une situation de roulage.

Dans le cas où le véhicule doit freiner ou décélérer, ou maintenir sa vitesse contre la pente descendante, ce qui se traduit par une situation de retenue, on cherche à inverser la pression au sein du circuit hydraulique 30 pour créer un couple inverse à la traction au niveau de la roue 22. L'utilisateur réalise une demande de retenue en manipulant la manette 205. La demande de retenue par l'utilisateur se fait sans employer de demande d'actionnement d'un frein, par une pédale de frein par exemple. Il s'agit d'une demande de frein moteur. De manière préférentielle, on va alors exploiter l'énergie délivrée par le moteur primaire 12 pour charger une batterie ou un accumulateur, ce qui génère un couple de retenue et réalise donc une fonction de frein moteur. Le couple de retenue est réalisé sur le moteur primaire 12, qui génère un couple sur la machine hydraulique 10 dans un sens opposé au déplacement du fluide à l'instant considéré, ce qui conduit à l'établissement d'une pression dans celle des lignes 32 ou 34, qui a tendance à générer un couple sur la machine hydraulique 20 dans le sens opposé au déplacement, c'est-à-dire un couple de retenue sur la roue 22. Dans le sens considéré dans cet exemple, la pression de retenue s'établit dans la ligne de retour 34. Cependant, dans le cas où la batterie est chargée, cette fonction n'est alors plus assurée. En particulier, le moteur M ne peut plus exercer de couple dans le sens qui s'oppose au débit de fluide, la pression souhaitée dans la ligne de retour 34 peut disparaitre, ce qui entraine la perte de l'effet de retenue. Une telle configuration est alors détectée et signalée au calculateur 200, qui pilote alors la commande électrique 124 de la valve de consigne 120 de manière à moduler la pression de commande appliquée à la commande hydraulique 64 de la valve de retour 60. La valve de retour 60 crée alors une restriction dans la ligne de retour 34 du circuit hydraulique 30, ce qui crée la montée de pression nécessaire dans la ligne retour, et vient ainsi consommer une partie de l'énergie du fluide dans la ligne de retour 34, ce qui vient alors réaliser une fonction de dissipation d'énergie dans le circuit hydraulique 30 et ainsi réaliser un fonctionnement équivalent à un fonctionnement en frein moteur.

En particulier, lorsque la saturation du moyen de récupération d'énergie, par exemple une batterie ou un accumulateur, est faite, cette configuration permet de s'y substituer pour un effet de retenue continu. En cas de défaillance autre que la saturation et qui ne permet plus au moteur 12 d'assurer sa fonction d'effort de retenue, l'invention permet aussi d'obtenir un effet équivalent à celui du frein moteur.

La valve de retour 60 permet donc de générer une perte de charge permettant d'obtenir une montée en pression dans la ligne retour sensiblement équivalente à celle obtenue en frein moteur par pilotage du moteur 12. La valve de retour est dimensionnée de manière à permettre de générer les pertes de charge souhaitées, notamment via le dimensionnement de ses sections de passage.

Afin de réaliser le pilotage, le calculateur 200 peut être associé à différent capteurs permettant de détecter des conditions de déclenchement de la valve de retour 60, par exemple un capteur du niveau de charge d'une batterie ou accumulateur associé au moteur primaire 12, un capteur de vitesse de rotation du moteur primaire 12 et/ou du premier appareil hydraulique 10 ou encore des capteurs de pression sur les différentes conduites du circuit, entre le moteur hydraulique 20 et la valve de retour 60, et entre la valve de retour 60 et la pompe hydraulique 10. Le calculateur 200 est par exemple configuré de manière à piloter la valve de retour 60 en fonction de la différence entre la vitesse de rotation du moteur primaire 12 et une consigne appliquée par l'utilisateur, qui traduit donc une vitesse de rotation souhaitée.

Dans l'exemple illustré, la valve de consigne 120 pilote également le frein 24.

La valve de retour 60 et le frein 24 sont typiquement configurés de manière à réaliser un freinage progressif de la transmission hydraulique. Selon un exemple, le frein 24 est un frein appliquant par défaut (c'est-à-dire en l'absence de commande) un couple de freinage maximum. Le frein 24 peut ainsi être configuré de manière à appliquer un couple de freinage maximum pour une pression de commande nulle, et un couple de freinage nul pour une pression de commande supérieure ou égale à une première valeur seuil de pression PS1. La valve de retour 60 est alors typiquement configurée pour former une restriction maximale lorsque la pression de commande appliquée via la commande hydraulique 64 est inférieure ou égale à PS1, et pour être passante (c'est-à-dire ne pas former une restriction) lorsque la pression de commande appliquée via la commande hydraulique 64 est supérieure ou égale à une seconde valeur seuil de pression PS2 telle que PS2 > PS1.

Ainsi, en fonctionnement nominal, la pression de commande appliquée est supérieure à PS2 ; le frein 24 et la valve de retour 60 n'ont donc pas d'effet de freinage ou de décélération sur la transmission hydraulique. Lorsque le circuit de freinage 100 est actionné pour délivrer une consigne de freinage, la consigne peut alors être progressive, de manière à diminuer progressivement la pression de pilotage du frein 24 et de la valve de retour 60. La consigne de freinage peut être une pression comprise entre PS2 et PS1. Le frein 24 n'exerce alors pas d'action de freinage, tandis que la valve de retour 60 définit une restriction proportionnelle à la consigne de pression appliquée dans la ligne de retour 34. Si le besoin de freinage augmente, la consigne de pression diminue progressivement jusqu'à atteindre la valeur PS1, pour laquelle la valve de retour 60 applique alors une restriction maximale dans la ligne de retour 34. Si le besoin de freinage augmente encore, la consigne de pression devient alors inférieure à PS1, et le frein 24 vient alors appliquer un effort de freinage sur le deuxième appareil hydraulique 20 ; les effets de freinage de la valve de retour 60 et du frein 24 s'additionnent. On comprend qu'un chevauchement des différentes plages de valeurs est possible, notamment en fonction des tolérances dans le dimensionnement et dans les plages de pilotage des différents composants, ou de pour prévoir un chevauchement des intervalles lorsque le frein 24 est adapté pour fonctionner en dynamique.

En cas de défaillance du système, par exemple en cas de défaillance électrique, la commande électrique 124 de la valve de consigne 120 est alors désactivée ; la valve de consigne bascule alors dans sa première configuration dans laquelle elle relie la commande hydraulique 64 de la valve de retour 60 et le frein 24 au réservoir R à pression ambiante, et applique donc une consigne nulle. La valve de retour 60 forme alors une restriction maximale sur la ligne de retour 34, et le frein 24 applique alors un effort de freinage maximum ; ce qui conduit typiquement à une immobilisation du véhicule ou de l'engin en cas de défaillance.

Dans l'exemple illustré, la valve de retour 60 est positionnée sur la ligne de retour 34 ; le système est donc prévu pour un sens principal de fonctionnement de la transmission, correspondant par exemple à un fonctionnement en marche avant d'un véhicule ou d'un engin. On comprend cependant qu'on peut également positionner une valve similaire à la valve de retour 60 sur la ligne d'alimentation 32 afin que le système présente une telle fonction de freinage dans les deux sens de fonctionnement.

Plus généralement, l'effet de retenue au moyen de la valve de retour 60 peut être employé en substitution ou en complément d'un effet de frein moteur, c'est-à-dire en substitution ou en complément d'une retenue électrique. Les deux effets de retenue peuvent donc se combiner pour cumuler leurs effets.

Ainsi, dans le cas où la retenue électrique ne peut pas être utilisée, la valve 60 est utilisée comme un moyen de retenue de substitution.

Par ailleurs, si l'effort de retenue requis excède les possibilités de retenue électrique, par exemple dans le cas d'une charge du véhicule ou d'une pente trop importantes pour les possibilités de retenue électrique, il est possible d'actionner conjointement la retenue électrique et la retenue via la valve 60 de manière à obtenir un effet de retenue accru.

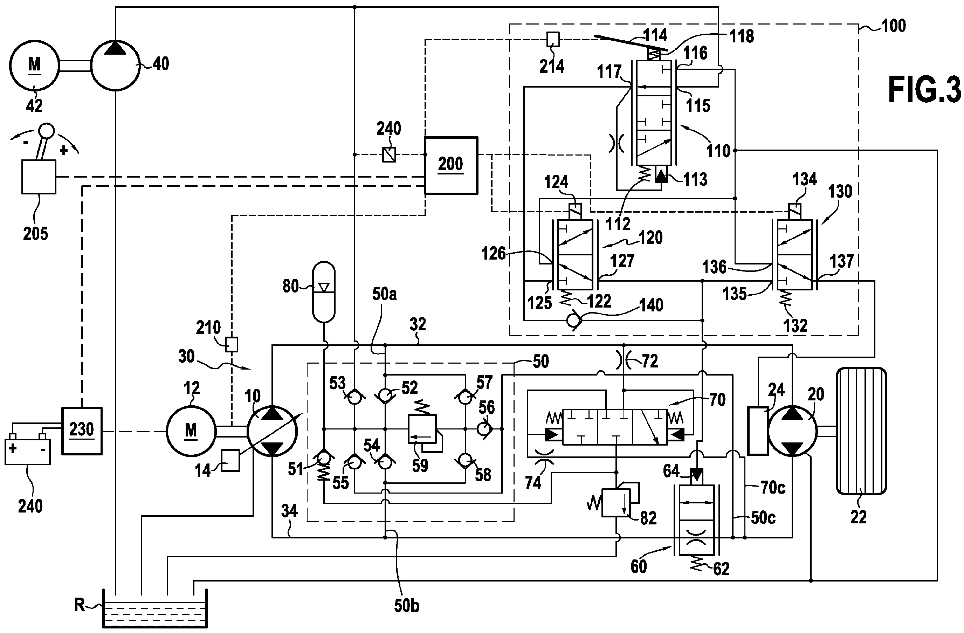

La figure 3 présente une variante du système décrit précédemment en référence à la figure 2. On décrit par la suite les différences entre cette variante et le système déjà décrit en référence à la figure 2.

Le premier appareil hydraulique 10 est ici représenté comme étant une pompe à cylindrée variable, avec un dispositif pilotage de cylindrée 14. On comprend bien que les systèmes représentés sur les figures 1, 2 et 3 peuvent employer des appareils hydrauliques à cylindrées fixes ou variables, et que les modes de réalisation illustrés ne sont pas limitatifs.

Le calculateur 200 est ici schématisé comme étant reliés à des capteurs, respectivement 210, 214 et 240, pouvant par exemple fournir des informations concernant la vitesse de rotation du moteur primaire 12 et/ou du premier appareil hydraulique 10, l'action de la commande mécanique 114, et la pression délivrée par la pompe de gavage 40.

Dans la variante représentée sur la figure 3, le circuit de freinage 100 comprend une valve de parking 130, adaptée pour piloter la pression de consigne délivrée au frein 24. La valve de parking 130 est typiquement une électrovanne, pilotée par une commande électrique 134 à laquelle s'oppose un moyen de rappel 132 tel qu'un ressort. La valve de parking 130 comprend un premier orifice 135 relié au troisième orifice 127 de la valve de consigne 120 et au troisième orifice 117 de la valve de freinage 110 via un clapet anti retour 140, un deuxième orifice 136 relié au réservoir R, et un troisième orifice 137 relié au frein 24. La valve de parking 130 présente une première configuration dans laquelle le premier orifice 135 est obturé, et le deuxième orifice 136 est relié au troisième orifice 137, et une deuxième configuration dans laquelle le premier orifice est relié au troisième orifice 137, et le deuxième orifice 136 est obturé. Elle est typiquement par défaut dans la première configuration. La commande électrique 134 est typiquement pilotée par un calculateur 200, qui peut être identique ou distinct de celui pilotage la commande électrique 124 de la valve de consigne 120, et est typiquement pilotée de manière à assurer une mise en service automatique du frein 24 dans des conditions prédéterminées, par exemple en cas de démarrage en côte, et également en cas de défaillance électrique.

Le circuit de gavage 50 est relié à un accumulateur 80, adapté pour former une réserve de pression pour assurer un gavage du circuit hydraulique 30 et un maintien de la cylindrée du premier appareil hydraulique 10 en cas de défaillance sur le circuit de gavage 50. Une soupape 59 tarée à une pression par exemple de l'ordre de 385 bar réalise une fonction de limiteur de pression du circuit hydraulique 30, en permettant une purge vers un réservoir R via un clapet anti retour taré 51 et une soupape tarée 82, ratés respectivement à une pression de 5 bar et de 18 bar. Ces deux niveaux de tarage définissent ainsi respectivement un tarage de gavage et un tarage d'échange. Le tarage de gavage du clapet anti retour taré 51 à 5 bar vient ainsi favoriser un passage du fluide de gavage dans la ligne de retour 34 du circuit hydraulique 30.La soupape tarée 82 définit quant à elle la pression requise dans la ligne de retour 34 pour permettre un échappement de fluide vers le réservoir R. Le circuit de gavage 50 tel que présenté sur la figure 2, comprenant notamment l'accumulateur 80, peut également être appliqué au circuit hydraulique 30 décrit précédemment en référence à la figure 1.

Le circuit hydraulique 30 comprend également un bloc d'échange 70, adapté pour prélever du fluide dans la ligne de retour 34 du circuit hydraulique 30, ou plus précisément dans la ligne du circuit hydraulique 30 ayant la pression la plus faible, ce qui correspond ici à l'admission du premier appareil hydraulique 10 en considérant un fonctionnement nominal selon un sens de fonctionnement donné, typiquement un déplacement en marche avant. Le bloc d'échange 70 est notamment lié à la conception en boucle fermée du circuit hydraulique 30 représenté sur la figure 2, et a pour fonction d'éviter l'échauffement de l'huile circulant dans la boucle fermée. Le bloc d'échange 70 a ainsi pour fonction de faire sortir de l'huile « chaude » du circuit hydraulique 30 vers le réservoir R, tandis que de l'huile « fraiche » sera introduite par le circuit de gavage 50. Le bloc d'échange 70 prélève une quantité de fluide qui est déterminée par la soupape tarée 82 et le déverse dans le réservoir R, afin d'assurer un renouvellement du fluide dans le circuit hydraulique 30, ce qui permet notamment de réaliser la filtration et le refroidissement du fluide.

Le fluide est prélevé via une ligne de repiquage 70c reliée à la ligne de retour 34 en amont de la valve de retour 60 selon un fonctionnement nominal en traction, et typiquement en amont de la troisième ligne de gavage 50c, ce qui permet de prélever de l'huile chaude lors d'un fonctionnement en traction en marche avant. Le bloc d'échange 70 est typiquement relié à la ligne d'alimentation 32 et à la ligne de retour 34 via des conduits munis de limiteurs de pression, respectivement 72 et 74. Ces limiteurs de pression 72 et 74 sont typiquement dimensionnés de manière à ce que pour une pression maximale d'utilisation du circuit hydraulique 30, le débit traversant lesdits limiteurs de pression 72 et 74 soit égal ou sensiblement égal au débit délivré par la pompe de gavage 40. Un tel dimensionnement des limiteurs de pression permet d'assurer un gavage suffisant du circuit hydraulique 30 par la pompe de gavage 40.

Le bloc d'échange 70 est configuré de manière à ne réaliser une fonction d'échange que lorsque le circuit hydraulique est actionné en traction dans un sens de fonctionnement nominal, correspondant typiquement à une fonction de traction en marche avant d'un véhicule, ce qui génère une haute pression dans la ligne d'alimentation 32. Dans un fonctionnement inverse, par exemple en marche arrière, ou bien en marche avant mais avec un fonctionnement en retenue, le bloc d'échange 70 est alors en configuration fermée, ce qui permet d'éviter une sortie de fluide du côté de la ligne de retour 34 en pression dans le sens de la marche et en frein moteur.

Les différents circuits tels que présentés ne permettent donc de réaliser une fonction de retenue via la valve de retour 60 que pour un sens de fonctionnement donné. On comprend toutefois que la valve de retour 60 peut être dédoublée de manière à rendre le système réversible. On peut ainsi ajouter une seconde valve de retour positionnée sur la ligne d'alimentation 32, qui permet ainsi de générer une perte de charge variable sur la ligne basse pression en cas de fonctionnement en sens inverse, par exemple pour un entrainement en marche arrière. La seconde valve de retour est alors ajoutée, associée à des moyens de pilotage, qui peuvent par exemple comprendre un second circuit de freinage similaire au circuit de freinage 100, ou une valve permettant d'acheminer le fluide issu du circuit de freinage 100 vers la commande hydraulique de l'une ou de l'autre des valves de retour. Les informations nécessaires à la commande de la première et de la seconde valve seront de même nature que décrit précédemment, avec en plus la prise en compte du sens d'avancement (marche avant ou marche arrière), afin d'actionner la valve permettant de créer une restriction sur la conduite de retour du moteur hydraulique 20.

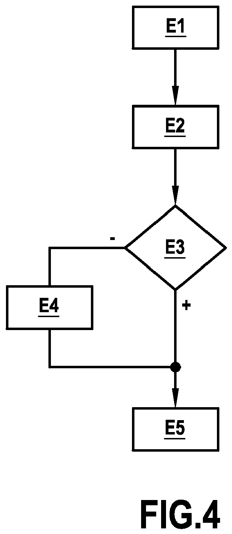

La figure 4 illustré schématiquement un procédé de pilotage des systèmes présentés en référence aux figures 1 à 3.

E1 : étape initiale ; le système est en fonctionnement nominal, la transmission assure un déplacement dans un sens de déplacement préféré d'un véhicule, typiquement en marche avant.

E2 : émission d'une consigne de retenue par l'utilisateur, via l'interface homme machine 205. La consigne de retenue ainsi émise par l'interface homme machine 205, par exemple via une manette, est différente d'une demande de freinage résultant de l'actionnement d'un levier ou une pédale de frein, dans le cas où le véhicule en est équipé qui va par exemple entrainer l'actionnement d'un frein à friction. Néanmoins, en cas de freinage d'urgence, le calculateur 200 peut être configuré de manière à actionner les moyens de retenue tels que définis précédemment qui génère un effet de freinage via une augmentation de la pression dans la ligne de retour en parallèle d'un autre moyen de freinage disponible sur le véhicule ou l'engin tel qu'un frein à friction.

E3 : détection d'une anomalie, par exemple par un capteur couplé au calculateur 200, ou par l'utilisateur, ou d'un défaut de capacité de freinage par le moteur primaire 12. En cas de détection d'anomalie, c'est-à-dire un freinage non effectif ou plus généralement si l'effort de retenue requis excède les possibilités de retenue électrique, on passe ensuite à l'étape E4. En l'absence d'anomalie, c'est-à-dire en cas de freinage effectif, on passe à l'étape E5.

L'ordre des étapes E2 et E3 peut être interverti selon la programmation du système, et notamment selon le calculateur 200.

E4 : étape d'actionnement du circuit de freinage 100. Le système de freinage se substitue ou se combine au moteur 12 pour réaliser un couple de retenue. Comme indiqué précédemment, l'effet de freinage via la valve de retour 60 peut venir en complément ou en substitution à la capacité de retenue électrique du moteur primaire 12.

E5 : étape de retenue effective, par exemple maintien de la vitesse en descente, décélération et/ou de freinage, sous l'effet d'une perte de charge dans le circuit hydraulique 30 générée par la valve de retour 60, et optionnellement d'un effort de freinage généré par le frein 24.

Le système proposé permet ainsi de répondre aux problématiques posées par les systèmes régénératifs, et permet ainsi d'assurer une fonction de freinage ou de décélération d'une transmission hydraulique entrainée par un moteur de type électrique couplé à un accumulateur hydraulique ou électrique, ou une batterie, même dans le cas où l'accumulateur ou la batterie sont totalement chargés et ne permettent donc plus de remplir une fonction de récupération et de dissipation d'énergie.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications.

## Revendications

1. Système de transmission hydraulique comprenant un premier appareil hydraulique (10) adapté pour être entrainé en rotation par un moteur primaire (12), un deuxième appareil hydraulique (20) adapté pour entraîner en rotation un organe de véhicule (22), le premier appareil hydraulique (10) et le deuxième appareil hydraulique (20) définissant un circuit hydraulique (30) comprenant une ligne d'alimentation (32) et une ligne de retour (34),
ledit système étant **caractérisé en ce qu'**il comprend :
des moyens de pilotage du moteur primaire (12), configurés de manière à émettre des consignes d'accélération ou de retenue, le système étant configuré de sorte que, en cas de consigne de retenue, le moteur primaire (12) exerce une fonction de retenue sur la rotation de l'organe de véhicule (22) en réalisant une élévation de pression dans la ligne de retour (34), et une valve de retour (60) positionnée sur la ligne de retour (34), la valve de retour (60) étant configurée de manière à définir une restriction variable dans la ligne de retour (34), la valve de retour (60) étant pilotée par une commande (64), et étant configurée pour sélectivement former une restriction sur la ligne de retour (34), de manière à exercer une fonction de retenue sur la rotation de l'organe de véhicule (22).

2. Système selon la revendication 1, dans lequel les moyens de pilotage sont adaptés pour déterminer la capacité du moteur primaire (12) à réaliser ladite fonction de retenue, et à piloter la valve de retour (60) et/ou le moteur primaire (12) pour exercer une fonction de retenue sur la rotation de l'organe de véhicule (22).

3. Système selon l'une des revendications 1 ou 2, dans lequel la valve de retour (60) est configurée pour, en l'absence de commande, former une restriction maximale sur la ligne de retour (34), et en présence d'une commande maximale, ne pas former de restriction sur la ligne de retour (34).

4. Système selon l'une des revendications 1 à 3, dans lequel le circuit hydraulique (30) comprend un circuit de gavage (50), alimenté par une pompe de gavage (40), ledit circuit de gavage étant configuré de manière à assurer un gavage de la ligne d'admission (32), et de la ligne de retour (34) du circuit hydraulique, en amont et en aval de la valve de retour (60).

5. Système selon la revendication 1, dans lequel la commande de la valve de retour est pilotée par un circuit de freinage (100) comprenant une électrovanne proportionnelle (120), configurée pour délivrer une pression nulle en l'absence de commande électrique.

6. Système selon la revendication 2, dans lequel le circuit de commande (100) comprend une valve de freinage (110), pilotée par une commande mécanique (114), la valve de freinage (110) reliant sélectivement l'électrovanne proportionnelle (120) au refoulement d'une pompe de gavage (40) du système d'assistance hydraulique, ou à un réservoir (R) à pression ambiante.

7. Système selon l'une des revendications à 1 à 3, comprenant en outre un calculateur (200), adapté pour piloter la valve de retour (60) en fonction d'une vitesse de rotation du moteur primaire (12) et/ou d'une consigne appliquée par un utilisateur.

8. Système selon l'une des revendications 1 à 6, comprenant en outre un frein (24) couplé au deuxième appareil hydraulique (20), le frein (24) étant piloté par une commande, le frein (24) et la valve de retour (60) étant configurés de sorte que :
- pour une pression de commande supérieure à une seconde valeur seuil de pression (PS2), le frein (24) n'exerce pas de couple de freinage, et la valve de retour (60) ne forme pas de restriction sur la ligne de retour (34),
- pour une pression de commande comprise entre la seconde valeur seuil de pression (PS2) et une première valeur seuil de pression (PS1) strictement inférieure à la seconde valeur seuil de pression (PS2), le frein (24) n'exerce pas de couple de freinage, et la valve de retour (60) forme une restriction sur la ligne de retour (34) proportionnelle à la pression de commande,
- pour une pression de commande égale à la première valeur seuil de pression (PS1), la valve de retour (60) forme une restriction maximale sur la ligne de retour (34), et le frein (24) n'exerce pas de couple de freinage,
- pour une pression de commande strictement inférieure à la première valeur seuil de pression (PS1), la valve de retour (60) forme une restriction maximale sur la ligne de retour (34), et le frein (24) exerce un couple de freinage proportionnel à la pression de commande.
- pour une pression de commande nulle, la valve de retour (60) forme une restriction maximale sur la ligne de retour (34), et le frein (24) exerce un couple de freinage maximal.

9. Système selon l'une des revendications 1 à 7, dans lequel le circuit hydraulique (30) est un circuit en boucle fermée, et dans lequel le premier appareil hydraulique (10) et le deuxième appareil hydraulique (20) présentent un fonctionnement réversible.

10. Système selon l'une des revendications 1 à 8, dans lequel le premier appareil hydraulique (10) est une pompe hydraulique à cylindrée variable.

11. Système selon la revendication 9, dans lequel le premier appareil hydraulique (10) présente un sens principal d'entrainement, dans lequel la ligne d'alimentation (32) est relié à un refoulement du premier appareil hydraulique (10) et la ligne de retour (34) est reliée à l'admission du premier appareil hydraulique (10), ledit système comprenant en outre un bloc d'échange (70), adapté pour prélever du fluide dans la ligne de retour (34) et le déverser dans un réservoir lorsque le premier appareil hydraulique(10) est entrainé dans ledit sens principal d'entrainement, et pour ne pas prélever du fluide dans la ligne de retour (34) lorsque le premier appareil hydraulique (10) n'est pas entrainé dans ledit sens principal d'entrainement.

12. Procédé de pilotage d'un système de transmission hydraulique comprenant un premier appareil hydraulique (10) adapté pour être entrainé en rotation par un moteur primaire (12), un deuxième appareil hydraulique (20) adapté pour entraîner en rotation un organe de véhicule (22), le premier appareil hydraulique (10) et le deuxième appareil hydraulique (20) définissant un circuit hydraulique (30) comprenant une ligne d'alimentation (32) et une ligne de retour (34), et des moyens de pilotage du moteur primaire (12), configurés de manière à émettre des consignes d'accélération ou de retenue, dans lequel
- lors du fonctionnement de la transmission, on détecte une anomalie, ou une consigne de l'utilisateur,
- lors d'une consigne de retenue ou d'une détection d'anomalie, on actionne un circuit de freinage (100), de manière à générer une perte de charge dans la ligne de retour (34) via une valve de retour (60) et/ou on pilote le moteur primaire (12) de manière à générer une élévation de pression dans la ligne de retour (34).

13. Procédé de pilotage selon la revendication 12, dans lequel lors de l'émission d'une consigne de retenue, on détermine la capacité du moteur primaire (12) à réaliser ladite fonction de retenue, et on pilote la valve de retour (60) et/ou le moteur primaire (12) pour exercer une fonction de retenue sur la rotation de l'organe de véhicule (22).

14. Procédé de pilotage selon l'une des revendications 12 ou 13, dans lequel la valve de retour (60) est configurée de manière à, en l'absence de commande, former une restriction maximale sur la ligne de retour (34), et en présence d'une commande maximale, ne pas former de restriction sur la ligne de retour (34).

15. Procédé de pilotage selon l'une des revendications 12 à 14, dans lequel on pilote la valve de retour (60) en fonction d'une vitesse de rotation du moteur primaire (12) et/ou d'une consigne appliquée par un utilisateur.

## Patentansprüche

1. Hydraulisches Getriebesystem, umfassend eine erste hydraulische Vorrichtung (10), die geeignet ist, von einem Primärmotor (12) rotatorisch angetrieben zu werden, eine zweite hydraulische Vorrichtung (20), die geeignet ist, ein Fahrzeugteil (22) rotatorisch anzutreiben, wobei die erste hydraulische Vorrichtung (10) und die zweite hydraulische Vorrichtung (20) einen Hydraulikkreis (30) definieren, der eine Zuführleitung (32) und eine Rückführleitung (34) umfasst,
wobei das System **dadurch gekennzeichnet ist, dass** es umfasst:
Steuermittel des Primärmotors (12), die derart ausgelegt sind, dass sie Beschleunigungs- oder Halteanweisungen ausgeben, wobei das System so ausgelegt ist, dass bei einer Halteanweisung der Primärmotor (12) eine Haltefunktion auf die Rotation des Fahrzeugteils (22) ausübt, indem er einen Druckanstieg in der Rückführleitung (34) realisiert, und ein Rücklaufventil (60), das auf der Rückführleitung (34) positioniert ist, wobei das Rücklaufventil (60) derart ausgelegt ist, dass eine variable Drosselung in der Rückführleitung (34) definiert wird, wobei das Rücklaufventil (60) von einer Steuerung (64) gesteuert wird und dazu ausgelegt ist, um die Rückführleitung (34) selektiv zu derart zu drosseln, dass eine Haltefunktion auf die Rotation des Fahrzeugteils (22) ausgeübt wird.

2. System nach Anspruch 1, wobei die Steuermittel geeignet sind, die Fähigkeit des Primärmotors (12) zur Ausübung der Haltefunktion zu bestimmen und das Rücklaufventil (60) und/oder den Primärmotor (12) für die Ausübung einer Haltefunktion auf die Rotation des Fahrzeugteils (22) zu steuern.

3. System nach einem der Ansprüche 1 oder 2, wobei das Rücklaufventil (60) dazu ausgelegt ist, um bei Abwesenheit einer Steuerung die Rückführleitung (34) maximal zu drosseln und bei Anwesenheit einer maximalen Steuerung die Rückführleitung (34) nicht zu drosseln.

4. System nach einem der Ansprüche 1 bis 3, wobei der Hydraulikkreis (30) einen Füllkreis (50) umfasst, der von einer Füllpumpe (40) gespeist wird, wobei der Füllkreis derart ausgelegt ist, dass er eine Füllung der Einlassleitung (32) und der Rückführleitung (34) des Hydraulikkreises vor und hinter dem Rücklaufventil (60) sicherstellt.

5. System nach Anspruch 1, wobei die Steuerung des Rücklaufventils von einem Bremskreis (100) gesteuert wird, der ein Proportionalmagnetventil (120) umfasst, das dazu ausgelegt ist, um bei Abwesenheit einer elektrischen Steuerung einen Nulldruck bereitzustellen.

6. System nach Anspruch 2, wobei der Steuerkreis (100) ein Bremsventil (110) umfasst, das von einer mechanischen Steuerung (114) gesteuert wird, wobei das Bremsventil (110) das Proportionalmagnetventil (120) selektiv mit dem Auslass einer Füllpumpe (40) des hydraulischen Assistenzsystems oder mit einem Behälter (R) mit Umgebungsdruck verbindet.

7. System nach einem der Ansprüche 1 bis 3, umfassend ferner einen Rechner (200), der geeignet ist, das Rücklaufventil (60) in Abhängigkeit von einer Drehgeschwindigkeit des Primärmotors (12) und/oder von einem von einem Benutzer angewendeten Sollwert zu steuern.

8. System nach einem der Ansprüche 1 bis 6, umfassend ferner eine Bremse (24), die mit der zweiten hydraulischen Vorrichtung (20) gekoppelt ist, wobei die Bremse (24) von einer Steuerung gesteuert wird, wobei die Bremse (24) und das Rücklaufventil (60) derart ausgelegt sind, dass:
- bei einem Steuerdruck über einem zweiten Druckgrenzwert (PS2) die Bremse (24) kein Bremsmoment ausübt und das Rücklaufventil (60) die Rückführleitung (34) nicht drosselt,
- bei einem Steuerdruck zwischen dem zweiten Druckgrenzwert (PS2) und einem ersten Druckgrenzwert (PS1) strikt unter dem zweiten Druckgrenzwert (PS2) die Bremse (24) kein Bremsmoment ausübt und das Rücklaufventil (60) die Rückführleitung (34) proportional zum Steuerdruck drosselt,
- bei einem Steuerdruck gleich dem ersten Druckgrenzwert (PS1) das Rücklaufventil (60) die Rückführleitung (34) maximal drosselt und die Bremse (24) kein Bremsmoment ausübt,
- bei einem Steuerdruck strikt unter dem ersten Druckgrenzwert (PS1) das Rücklaufventil (60) die Rückführleitung (34) maximal drosselt und die Bremse (24) ein Bremsmoment proportional zum Steuerdruck ausübt.
- bei einem Steuerdruck von Null das Rücklaufventil (60) die Rückführleitung (34) maximal drosselt und die Bremse (24) ein maximales Bremsmoment ausübt.

9. System nach einem der Ansprüche 1 bis 7, wobei der Hydraulikkreis (30) ein geschlossener Kreislauf ist und wobei die erste hydraulische Vorrichtung (10) und die zweite hydraulische Vorrichtung (20) einen reversiblen Betrieb aufweisen.

10. System nach einem der Ansprüche 1 bis 8, wobei die erste hydraulische Vorrichtung (10) eine hydraulische Pumpe mit variablem Hubraum ist.

11. System nach Anspruch 9, wobei die erste hydraulische Vorrichtung (10) eine Hauptantriebsrichtung aufweist, wobei die Zuführleitung (32) mit einem Auslass der ersten hydraulischen Vorrichtung (10) verbunden ist und die Rückführleitung (34) mit dem Einlass der ersten hydraulischen Vorrichtung (10) verbunden ist, wobei das System ferner einen Austauschblock (70) umfasst, der für die Entnahme des Fluids aus der Rückführleitung (34) und dessen Einleitung in einen Behälter geeignet ist, wenn die erste hydraulische Vorrichtung (10) in der Hauptantriebsrichtung angetrieben wird und um kein Fluid aus der Rückführleitung (34) zu entnehmen, wenn die erste hydraulische Vorrichtung (10) nicht in der Hauptantriebsrichtung angetrieben wird.

12. Verfahren zur Steuerung eines hydraulischen Getriebesystems, umfassend eine erste hydraulische Vorrichtung (10), die geeignet ist, von einem Primärmotor (12) rotatorisch angetrieben zu werden, eine zweite hydraulische Vorrichtung (20), die geeignet ist, ein Fahrzeugteil (22) rotatorisch anzutreiben, wobei die erste hydraulische Vorrichtung (10) und die zweite hydraulische Vorrichtung (20) einen Hydraulikkreis (30) definieren, der eine Zuführleitung (32) und eine Rückführleitung (34) umfasst, und Steuermittel des Primärmotors (12), die dazu ausgelegt sind, um Beschleunigungs- oder Rückhalteanweisungen auszugeben, wobei
- im Betrieb des Getriebes eine Anomalie oder ein Sollwert des Benutzers ermittelt wird,
- bei einer Halteanweisung oder einer festgestellten Anomalie ein Bremskreis (100) derart betätigt wird, dass ein Lastverlust in der Rückführleitung (34) über ein Rücklaufventil (60) erzeugt wird und/oder der Primärmotor (12) derart gesteuert wird, dass ein Druckanstieg in der Rückführleitung (34) erzeugt wird.

13. Steuerverfahren nach Anspruch 12, wobei bei der Ausgabe einer Halteanweisung die Fähigkeit des Primärmotors (12) zur Durchführung der Haltefunktion bestimmt wird und das Rücklaufventil (60) und/oder der Primärmotor (12) gesteuert werden, um eine Haltefunktion auf die Rotation des Fahrzeugteils (22) auszuüben.

14. Steuerverfahren nach einem der Ansprüche 12 oder 13, wobei das Rücklaufventil (60) dazu ausgelegt ist, um bei Abwesenheit einer Steuerung die Rückführleitung (34) maximal zu drosseln und bei Anwesenheit einer maximalen Steuerung die Rückführleitung (34) nicht zu drosseln.

15. Steuerverfahren nach einem der Ansprüche 12 bis 14, wobei das Rücklaufventil (60) in Abhängigkeit von einer Drehgeschwindigkeit des Primärmotors (12) und/oder von einem von einem Benutzer angewendeten Sollwert gesteuert wird.

## Claims

1. A hydraulic transmission system comprising a first hydraulic apparatus (10) adapted to be driven in rotation by a primary motor (12), a second hydraulic apparatus (20) adapted to drive a vehicle component (22) in rotation, the first hydraulic apparatus (10) and the second hydraulic apparatus (20) defining a hydraulic circuit (30) comprising a supply line (32) and a return line (34),
said system being **characterized in that** it comprises:
means for driving the primary motor (12), configured so as to issue acceleration or restraint instructions, the system being configured so that, in the event of a restraint instruction, the primary motor (12) performs a restraint function on the rotation of the vehicle component (22) by increasing the pressure in the return line (34), and a return valve (60) positioned on the return line (34), the return valve (60) being configured so as to define a variable restriction in the return line (34), the return valve (60) being driven by a controller (64), and being configured to selectively form a restriction on the return line (34), so as to exert a restraint function on the rotation of the vehicle component (22).

2. The system according to claim 1, wherein the driving means are adapted to determine the capacity of the primary motor (12) to perform said restraint function, and to drive the return valve (60) and/or the primary motor (12) to exert a restraint function on the rotation of the vehicle component (22).

3. The system according to one of claims 1 or 2, wherein the return valve (60) is configured, in the absence of control, to form a maximum restriction on the return line (34), and in presence of a maximum control, not to form a restriction on the return line (34).

4. The system according to one of claims 1 to 3, wherein the hydraulic circuit (30) comprises a booster circuit (50), supplied by a booster pump (40), said booster circuit being configured so to boost the supply line (32), and the return line (34) of the hydraulic circuit, upstream and downstream of the return valve (60).

5. The system according to claim 1, wherein the control of the return valve is controlled by a braking circuit (100) comprising a proportional solenoid valve (120), configured to deliver zero pressure in the absence of an electrical control.

6. The system according to claim 2, wherein the control circuit (100) comprises a brake valve (110), driven by a mechanical control (114), the brake valve (110) selectively connecting the proportional solenoid valve (120) to the outlet of a booster pump (40) of the hydraulic assistance system, or to a reservoir (R) at ambient pressure.

7. The system according to one of claims 1 to 3, further comprising a computer (200), adapted to control the return valve (60) based on a rotational speed of the primary motor (12) and/or an instruction applied by a user.

8. The system according to one of claims 1 to 6, further comprising a brake (24) coupled to the second hydraulic apparatus (20), the brake (24) being driven by a control, the brake (24) and the return valve (60) being configured so that:
- for a control pressure greater than a second pressure threshold value (PS2), the brake (24) does not exert a braking torque, and the return valve (60) does not form a restriction on the return line (34),
- for a control pressure between the second pressure threshold value (PS2) and a first pressure threshold value (PS1) strictly lower than the second pressure threshold value (PS2), the brake (24) does not exert any braking torque, and the return valve (60) forms a restriction on the return line (34) proportional to the control pressure,
- for a control pressure equal to the first pressure threshold value (PS1), the return valve (60) forms a maximum restriction on the return line (34), and the brake (24) does not exert any braking torque,
- for a control pressure strictly lower than the first pressure threshold value (PS1), the return valve (60) forms a maximum restriction on the return line (34), and the brake (24) exerts a braking torque proportional to the control pressure,
- for zero control pressure, the return valve (60) forms a maximum restriction on the return line (34), and the brake (24) exerts a maximum braking torque.

9. The system according to one of claims 1 to 7, wherein the hydraulic circuit (30) is a closed-loop circuit, and wherein the first hydraulic apparatus (10) and the second hydraulic apparatus (20) have a reversible operation.

10. The system according to one of claims 1 to 8, wherein the first hydraulic apparatus (10) is a variable displacement hydraulic pump.

11. The system according to claim 9, wherein the first hydraulic apparatus (10) has a main drive direction, wherein the supply line (32) is connected to an outlet of the first hydraulic apparatus (10) and the return line (34) is connected to the inlet of the first hydraulic apparatus (10), said system further comprising an exchange block (70), adapted to take fluid from the return line (34) and discharge it into a reservoir when the first hydraulic apparatus (10) is moved in said main movement direction, and so as not to take fluid from the return line (34) when the first hydraulic apparatus (10) is not moved in said main movement direction.

12. A method of driving a hydraulic transmission system comprising a first hydraulic apparatus (10) adapted to be driven in rotation by a primary motor (12), a second hydraulic apparatus (20) adapted to drive a vehicle member (22) in rotation, the first hydraulic apparatus (10) and the second hydraulic apparatus (20) defining a hydraulic circuit (30) comprising a supply line (32) and a return line (34), and means for driving the primary motor (12), configured so as to issue acceleration or restraint instructions, wherein
- during the operation of the transmission, an anomaly or a user instruction is detected,
- during a restraint instruction or an anomaly detection, a braking circuit (100) is actuated, so as to generate a pressure drop in the return line (34) via a return valve (60) and/or the primary motor (12) is driven so as to generate a pressure increase in the return line (34).

13. The driving method according to claim 12, wherein when a restraint instruction is emitted, the capacity of the primary motor (12) to perform said restraint function is determined, and the return valve (60) and/or the primary motor (12) is driven so as to exert a restraint function on the rotation of the vehicle component (22).

14. The driving method according to one of claims 12 or 13, wherein the return valve (60) is configured so as, in the absence of control, to form a maximum restriction on the return line (34), and in the presence of maximum control, not to form a restriction on the return line (34).

15. The driving method according to one of claims 12 to 14, wherein the return valve (60) is driven based on a rotational speed of the primary motor (12) and/or of an instruction applied by a user.
